# EUROPEAN PATENT APPLICATION

(11) **EP 4 755 269 A1**
(43) Date of publication of application: **10.06.2026**
(21) Application number: 25220394.8
(22) Date of filing: 03.12.2025
(51) Int. Cl.: A47J 31/00, A47J 31/46, A47J 31/52

(54) **OPTIMIZED CONTROL OF A WATER PUMP IN AN AUTOMATIC BEVERAGE PREPARATION MACHINE**

(30) Priority: 05.12.2024 IT 202400027576
(71) Applicant: EVOCA S.p.A., 24030 Valbrembo (BG) (IT)
(72) Inventor: ZONATO, Alberto, 24030 VALBREMBO (BG) (IT)
(74) Representative: Studio Torta S.p.A.

(57) **Abstract**

An automatic beverage preparation machine (**1**) comprising a brewing assembly (**2**) comprising a brewing chamber (**11**) to contain a dose of a powder product; a hydraulic circuit (**4**) to supply a brewing liquid to the brewing chamber (**2**) to prepare a beverage from the powder product in the brewing chamber (**2**) and comprising a pump (**7**) and a flow meter (**5**) to measure an amount of brewing liquid supplied to the brewing chamber (**3**); and an electronic control unit (**17**) configured to communicate with the flow meter (**5**) to receive an output thereof and with the pump (**7**) to control operation thereof. The electronic control unit (**17**) is further configured to control the pump (**7**) to carry out a beverage preparation cycle comprising a pre-brewing phase during which the brewing liquid is supplied to the brewing chamber (**3**) to pre-brew the powder product contained therein, followed by a dwell time during which no brewing liquid is supplied to the brewing chamber (**3**), and a subsequent brewing phase during which the brewing liquid is supplied to the brewing chamber (**3**) to brew the powder product contained therein and at the end of which the prepared beverage is delivered. The electronic control unit (**17**) is further configured to store functional data required to control operation of the pump (**7**) during a beverage preparation cycle; and, based on the stored functional data, open-loop controlling the pump (**7**) during a pre-brewing phase to cause it to operate at a stored partialised pre-brewing electrical power (P₁), so as to result in a time development of the flow rate (Q) of the brewing liquid supplied to the brewing chamber (**3**) being initially substantially constant at an initial pre-brewing flow rate (Q₁) during filling of the brewing chamber (**3**) and subsequently decreasing from the initial pre-brewing water flow rate (Q₁) to a final pre-brewing flow rate (Q₂) to cause the brewing chamber (**3**) to become completely filled (**3**); and closed-loop controlling the pump (**7**) during a brewing phase based on the flow rate (Q) of the brewing liquid measured by the flow meter (**5**) so as to cause a stored target brewing flow rate (Q₄) to be reached and then maintained from an initial brewing flow rate (Q₃).

## Description

### TECHNICAL FIELD OF THE INVENTION

The present invention relates in general to the field of automatic beverage preparation machines, in particular for the preparation of beverages obtained by brewing a brewing substance with a pressurised brewing liquid, in particular hot water, such as, for example, coffee-based beverages, for example espresso, instant coffee, long coffee or "*fresh-brew*", etc., tea-based beverages, or barley-based beverages or other cereal.

More particularly, the present invention relates to an optimized control of a water pump in an automatic beverage preparation machine, which control is differentiated between the pre-brewing and brewing phases or even within the brewing phase where a brewing substance is brewed with a brewing liquid.

The present invention finds advantageous, though not exclusive, application in professional, automatic or semi-automatic espresso coffee machines, to which the following description will refer for descriptive convenience without thereby losing generality.

### BACKGROUND OF THE INVENTION

As is known, coffee is experiencing a great interest from the public and the hospitality industry sector, also known as Ho.Re.Ca., an acronym for *Hotellerie*, *Restaurant*, *Café*. Interest in this beverage is growing among consumers, brands dedicated to the taste and experience of this beverage are multiplying, and this despite the successive crises. Indeed, consumption in the last 40 years has increased from 80 to 160 million 60-kg bags of coffee and millennials are also contributing to this growth, both in traditional markets and in less mature ones where the coffee segment has been created from scratch in regions such as China or the Far East.

Today, the industry's focus is on premiumization, i.e. the tendency of consumers to purchase higher-priced products, and on specialties, while espresso accounts for 10% of the business of large chains.

In the field of professional espresso coffee machines, various technologies exist to control the coffee brewing process in order to ensure a good quality of the dispensed product.

As is known, the coffee brewing process comprises a pre-brewing phase where coffee powder contained in a brewing chamber is pre-brewed, followed by a short dwell time and then a subsequent brewing phase where the coffee powder is brewed and during which the brewed beverage is dispensed.

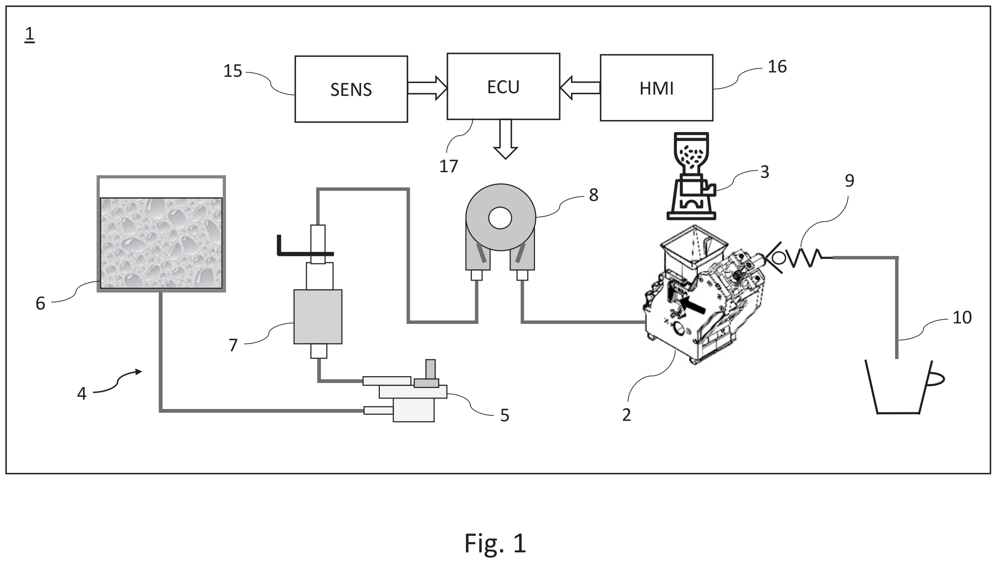

Figure 1 shows a diagram illustrating the on/off sequence of a water pump operated to supply the brewing chamber with an amount of water required to prepare a coffee beverage during the pre-brewing and brewing phases.

With this type of control, it is possible to intervene in the pre-brewing and brewing phases by varying some parameters which are normally:
- Pre-brewing phase:
   ▪ Duration, measured in terms of time interval or in terms of water volume measured with a flow meter
   ▪ Power/flow rate of the water pump, with constant power (full or partialised, continuous or on/off operated)
- Dwell time:
   ▪ Duration, measured in terms of time interval
- Brewing phase:
   ▪ Duration, measured in terms of time interval or in terms of water volume measured with the flow meter
   ▪ Power/flow rate of the pump, with constant power (full or partialised, continuous or on/off operated) or variable power (feedback-operated on flow rate target),
in which the flow rate of the water pump is proportional to the electric power with which the water pump is electrically supplied and inversely proportional to the back-pressure downstream of the water pump, according to a characteristic curve.

The Applicant has found that controlling the water pump in terms of duration (time/volume) or power/flow rate can, however, have the disadvantages discussed below:
- Pre-brewing phase:
   ▪ Duration in terms of time interval: the wetting of the coffee powder cake in the brewing chamber may not be constant depending on how full or empty the hydraulic circuit actually is, since a constant time does not implicitly guarantee the necessary and sufficient volume of water to wet the cake. For example, if the filling time of the brewing chamber is estimated to be 3 seconds, this value may not be sufficient to fill the required volume in the chamber, if 1 second were needed to restore full filling of the upstream circuit. Conversely, a time of 4 seconds could be excessive if the upstream circuit between the flow meter and the brewing chamber is full.
   ▪ Duration in terms of water volume: the wetting of the coffee powder cake in the brewing chamber may not be constant depending on how full or empty the hydraulic circuit actually is, since the volume introduced is constant but not the starting volume. For example, estimating full filling of the brewing chamber at 50 pulses of the flow meter (50 pulses = approx. 25 ml of water), a part of this value might be needed to restore full filling of the upstream circuit
   ▪ Pump power, full or partialised constant power (continuous or on/off operation): full power does not allow a precise approach to the pre-brewing phase stop target, since higher flow rates also correspond to a faster and more difficult control need.
- Brewing phase:
   ▪ Pump power, full or partialised constant power: constant power does not allow adaptation to the working conditions of the coffee cake, which will therefore be the main and sometimes the only discriminating factor of the dispensing: constant full power could:
      ✔ generate an excessive dynamic pressure (compaction) on cakes obtained with narrow grain sizes (e.g.: < 400 µm) with brewing pressures close to the pump stall (12-15 bar) and lead to a dispensing with too low and intermittent flow rate (e.g.: < 1 ml/s);
      ✔ generate an excessive flow rate (e.g.: > 4 ml/s) for a cake not subjected to excessive compaction (e.g.: powder saturation in the chamber < 100% or wide grain size > 500 µm) and therefore non-optimal dispensing times (e.g.: too short with < 10 s for 40 ml of coffee, i.e. flow rates > 4 ml/s) which compromise correct extraction;
      ✔ a constant but partialised power might not, conversely, guarantee sufficient compaction of the coffee cake for optimal extraction (e.g.: a power of 60% to guarantee a flow rate of 2 ml/s might not be sufficient to guarantee compaction of the coffee cake) or be sufficient to compensate for any pressure drops that might affect the hydraulic circuit (e.g.: a fixed partialisation < 100% might not be sufficient to overcome the pressure drops generated by the coffee cake added to those of circuit clogging due to limescale). Furthermore, a constant and partialised power is unable to adapt to system variability (e.g. by introducing a back-pressure spring with lower stiffness, the flow rate also changes);
   ▪ Pump power feedback-operated on flow rate target: a pump feedback that aims as the sole target to achieve a specific flow rate might not meet the conflicting needs of generating sufficient compaction on the coffee cake (in the initial dispensing phase) and ensuring an optimal dispensing flow (from when the actual visible dispensing begins): for example, a power value of 50% that ensures the required flow rate target is reached throughout the dispensing might not be sufficient to guarantee the initial compaction of the coffee cake, for which a pump power greater than 50% and close to 100% would instead be ideal. Therefore, tracking the same flow rate value in all brewing phases might not be the best pump management.

Some of the above-mentioned technologies are described for example in EP 1 867 262 B1, EP 2 313 182 B1, EP 2 313 183 B1, EP 2 575 561 B1, EP 2 642 906 B1, EP 2 991 530 B1, EP 3 364 826 A1, WO 2015/124592 A1 and US 2015/110935 A1.

In particular, WO 2015/124592 A1 discloses a coffee machine comprising at least one hydraulic brewing circuit comprising at least one water supply pump, at least one boiler hydraulically cascade-connected to the supply pump, at least one brewing assembly hydraulically connected to the boiler and through which a hot water flow rate can flow for the execution of a brewing cycle, means for regulating the water flow rate, means for measuring the water flow rate, and a feedback controller connected to the regulating means and the measuring means and configured to compare in real time the current value of the water flow rate measured by the measuring means with a corresponding reference value and to control the regulating means so as to cancel any deviation of the current value of the water flow rate with respect to the corresponding reference value of the water flow rate.

US 2015/110935 A1 relates to flow rate control in an espresso coffee machine during a multi-phase brewing process comprising a pre-brewing phase and an extraction phase. During the pre-brewing phase, the ground coffee is slowly pre-wetted and/or degassed with a first volume of water dispensed at a first flow rate. During the extraction phase, a second volume of water is dispensed at a second flow rate greater than the first flow rate and at a generally higher pressure than the pressure at which the first volume is dispensed, to extract the espresso coffee. The flow rates, volumes and pressures are regulated by the espresso coffee machine, which comprises a flow rate control assembly comprising a first and a second path and a first and a second valve. Baristas can vary the flow rate, volume and pressure of the water during the brewing process by opening, closing or otherwise adjusting at least one of the valves.

The Applicant has found that the professional espresso coffee machines disclosed in the above-listed prior art documents, although satisfactory in many respects, still have ample room for improvement with regard to the control of the coffee brewing process, which is a fundamental factor for the quality of the dispensed beverages.

To this end, in WO 2021/005570 A1 the Applicant proposes a beverage preparation machine in which one or different target flow rate profiles of a brewing liquid to be supplied to a brewing assembly during a beverage preparation cycle are stored in an electronic control unit configured to closed-loop control a flow rate regulating solenoid valve based on a flow rate profile measured by a flow meter and the stored target flow rate profile so as to cause the current flow rate of the brewing liquid supplied to the brewing assembly to track the target flow rate profile of the brewing liquid.

In WO 2022/201115 A1 the Applicant proposes, instead, a beverage preparation machine in which an electronic system for regulating the flow rate of a brewing liquid supplied to a brewing assembly during a beverage preparation cycle is controlled based on stored functional data and an output of a flow meter for the purpose of pre-brewing a brewing substance with the brewing liquid in the brewing chamber, followed by pressurising the brewing chamber, and subsequently brewing the brewing substance with the brewing liquid in the brewing chamber.

Pressurising the brewing chamber comprises progressively increasing the flow rate of the brewing liquid supplied to the brewing assembly; determining, based on the output of the flow meter, that the flow rate of the brewing liquid supplied to the brewing assembly has one or different predefined characteristics indicative of an appropriate filling condition of the brewing chamber with the brewing liquid; and, when the flow rate of the brewing liquid supplied to the brewing assembly assumes these characteristics, maintaining the electronic system for regulating the flow rate of the brewing liquid supplied to the brewing assembly in a predefined stationary operating state, so as to allow the flow rate of the brewing liquid supplied to the brewing assembly to evolve freely.

Brewing of the brewing substance with the brewing liquid in the brewing chamber is implemented according to a controlled water flow rate brewing mode comprising counteracting the natural tendency of the flow rate of the brewing liquid supplied to the brewing assembly to increase; determining, based on the output of the flow meter, that the flow rate of the brewing liquid supplied to the brewing assembly has one or different predefined characteristics indicative of a stabilisation of the flow rate of the brewing liquid supplied to the brewing assembly; and, when the flow rate of the brewing liquid supplied to the brewing assembly assumes the one or the different predefined characteristics, closed-loop controlling the electronic system for regulating the flow rate of the brewing liquid supplied to the brewing assembly based on the output of the flow meter so as to maintain the stabilised flow rate of the brewing liquid supplied to the brewing assembly.

### OBJECT AND SUMMARY OF THE INVENTION

The Applicant has found that the beverage preparation machine described in WO 2021/005570 A1 and WO 2022/201115 A1, although very satisfactory in many respects, also has room for improvement with regard to the control of the pre-brewing and brewing processes of the brewing substance.

The object of the present invention is hence to provide an improved automatic beverage preparation machine compared to the known ones with regard to the control of the pre-brewing and brewing processes of the brewing substance.

According to the present invention, a beverage preparation machine is provided, as claimed in the appended claims.

### BRIEF DESCRIPTION OF THE DRAWINGS

Figure 1 shows a block diagram of an automatic coffee machine.
Figure 2 shows a diagram of time development of water flow rate supplied to a brewing assembly of the automatic coffee machine of Figure 1.

### DETAILED DESCRIPTION OF EMBODIMENTS OF THE INVENTION

The present invention will now be described in detail with reference to the accompanying figures to enable a person skilled in the art to make and use it. Various modifications to the described embodiments will be immediately apparent to those skilled in the art and the generic principles described can be applied to other embodiments and applications without departing from the protective scope of the present invention, as defined in the appended claims. Therefore, the present invention should not be considered limited to the embodiments described and illustrated, but should be accorded the broadest protective scope consistent with the features described and claimed.

The technical and scientific terms used herein have the same meaning commonly used by those of ordinary skill in the art to which the present invention pertains. In case of conflict, the present description, including the definitions provided, shall be binding. Furthermore, the examples are provided for purely illustrative purposes and as such should not be considered limiting. The block diagrams included in the appended figures and described below are not to be understood as a representation of structural features, i.e. constructive limitations, but should be interpreted as a representation of functional features, i.e. intrinsic properties of the devices and defined by the effects obtained, i.e. functional limitations, and which can be implemented in different ways, thus so as to protect the functionality thereof.

Figure 1 shows a block diagram of an automatic coffee machine referenced as a whole with reference numeral **1** and only those parts of which necessary for understanding the present invention are shown.

As shown in Figure 1, the automatic coffee machine **1** comprises one or different brewing assemblies **2**, only one of which is shown in Figure 1 for illustrative convenience, designed to carry out either one and the same or different brewing processes of either one and the same or different powdered brewing substances, specifically coffee powder, with either one and the same or different brewing liquids, specifically pressurised hot water, to produce either one and the same or different coffee-based beverages, specifically coffee beverages, in particular espresso coffee, either in identical or different quantities, for example short or long espresso coffees, starting from a coffee powder of either one and the same or different types in terms of coffee species (arabica, robusta), coffee blend, coffee grain size, treatment to which the coffee has been subjected, for example decaffeinated, flavoured, etc.

Each brewing assembly **2** comprises a brewing chamber **3**, which is so sized as to contain a dose of coffee powder for the production of a respective coffee beverage and to which a determined amount of pressurised hot water is supplied, by means of a hydraulic circuit **4**, for the preparation of a corresponding amount of a coffee beverage by brewing the coffee powder contained therein. The coffee beverage thus obtained is then dispensed into a cup through a coffee beverage dispensing nozzle.

The dose of coffee powder can be supplied into the brewing chamber **3** in bulk form, by means of a doser, for example in the form of a screw or a rotary distributor, which draws it from a suitable reservoir, or conveniently obtained by grinding a corresponding amount of coffee beans contained in a suitable container, or in portioned form, i.e. contained in a respective capsule.

The hydraulic circuit **4** comprises:
- a water pump **7**, conveniently an electric variable-speed vibration pump, for drawing cold water from a cold water source, in the illustrated example, from a water tank **6** housed in, or external to and fluidly connected to, the automatic coffee machine **1**;
- a volumetric water counter **5**, also known as a water flow meter, arranged fluidically upstream of the water pump **7** to measure, and output an electrical output indicative of, an amount of water, measured in volume, supplied by the water pump **7**;
- a water heater **8**, conveniently of an electric type, arranged fluidically downstream of the water pump **7** to heat the cold water; and
- where the coffee powder is supplied in bulk form to the brewing chamber **3** of the brewing assembly **2**, a back-pressure valve **9** arranged fluidically between an outlet of the brewing assembly **2** and a beverage dispensing nozzle **10**, so as to generate a back-pressure such as to give rise to a desired flow rate of the dispensed coffee beverage.

The automatic coffee machine **1** further comprises:
- an electronic sensory system **15** designed to measure, and output electrical outputs indicative of, different operating quantities of the automatic coffee machine **1**;
- a user interface **16** to allow a consumer to request a selected coffee beverage to be dispensed and to customise the selected coffee beverage, by selecting, for example, the amount of one or different additives contained therein, such as, for example, an amount of sugar or sweetener, etc., and/or its organoleptic qualities, in particular an aroma intensity level, and to output an output indicative of the selections made by the consumer;
- an electronic control unit **17**, typically of the microprocessor type, in communication with, in particular electrically connected to, the water flow meter **5**, the electronic sensory system **15** and the user interface **16** to receive outputs thereof, and to the water heater **8**, each brewing assembly **2** and the water pump **7** to control operation thereof.

The electronic control unit **17** comprises, or is externally associated with, a memory containing software designed to cause, when executed by the electronic control unit **17**, the latter to become configured to control, as far as the present invention is concerned, operation of the water pump **7** to cause the brewing chamber **3** of each brewing assembly **2** to be supplied with an amount of pressurised hot water necessary for the preparation of the selected coffee beverage, in the manner described in detail below.

In particular, the electronic control unit **17** is configured to:
- store functional data necessary for controlling the water pump **7** during a coffee beverage preparation cycle and representative of values or profiles of electric power at which the water pump **7** is to be operated during the pre-brewing phases and of water flow rate to be supplied to the brewing chamber **3** of each brewing assembly **2** during the brewing phases, in the manner described in greater detail below; and
- control the water pump **7** during a coffee beverage preparation cycle based on the stored functional data so as to carry out a pre-brewing phase during which the coffee powder contained in a brewing chamber **3** of a brewing assembly **2** is pre-brewed with pressurised hot water supplied to the brewing chamber **3** , followed by a dwell phase, during which no pressurised hot water is supplied to the brewing chamber **3**, and by a subsequent brewing phase, during which the coffee powder contained in the brewing chamber **3** is brewed with pressurised hot water supplied to the brewing chamber **3** and at the end of which a coffee beverage thus obtained is dispensed.

In particular, the electronic control unit **17** is configured to control the water pump **7** so as to cause it to operate in a differentiated manner both between a pre-brewing phase and a subsequent brewing phase, and during a brewing phase, so as to controllably and repeatably fill the brewing chamber **3** with water during the pre-brewing phase, to adequately compact the coffee powder in the brewing chamber **3** and to achieve a specific flow rate of the dispensed beverage during the brewing phase.

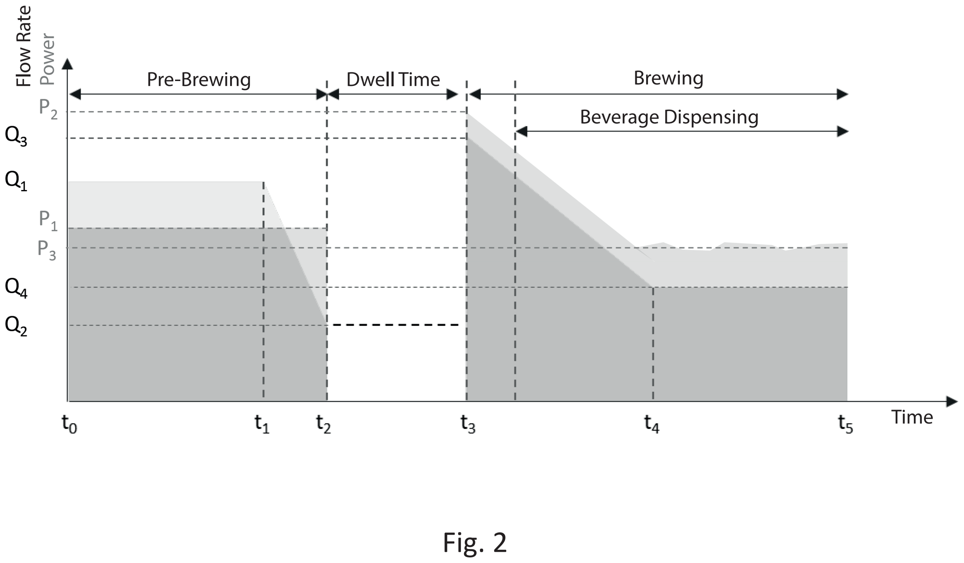

According to an aspect of the invention, the electronic control unit **17** is configured to control the water pump **7** during a pre-brewing phase and a subsequent brewing phase so as to cause it to operate in the manner described below with reference to the time diagram shown in Figure 2, in which the time development of the water flow rate supplied by the water pump **7** to the brewing chamber **3** during the pre-brewing and brewing phases is graphically shown:
- Pre-brewing phase (time interval t₀ ÷ t₂ in Figure 2): open-loop controlling the water pump **7** so as to cause it to operate for the entire duration of the pre-brewing phase at a partialised pre-brewing electrical power P₁, i.e. lower than, conveniently between 50% and 100%, the maximum electrical power at which the water pump **7** is designed to operate and which is conveniently, but not necessarily, averagely substantially constant for the entire duration of the pre-brewing phase.

In this way, during the pre-brewing phase the brewing chamber **3** begins to fill with water and the water flow rate Q supplied by the water pump **7** to the brewing chamber **3** assumes a time-varying development comprising:
▪ a first pre-brewing sub-phase (time interval t₀ ÷ t₁ in Figure 2), during which the water flow rate Q remains substantially constant at an initial pre-brewing water flow rate Q₁, for example 4-8 ml/s, as a consequence of the fact that the brewing chamber **3** is filling with water and the pressure in the brewing chamber **3** is equal to ambient pressure; and
▪ a second pre-brewing sub-phase (time interval t₁ ÷ t₂ in Figure 2), during which the water flow rate decreases from the initial pre-brewing water flow rate Q₁ to a final pre-brewing water flow rate Q₂, for example from the aforementioned 4-8 ml/s to 1-3 ml/s, as a consequence of the fact that the brewing chamber **3** has filled with water and, hence, the pressure in the brewing chamber **3** has begun to increase, thus hindering flow of water into the brewing chamber **3** and consequently causing a reduction in the delivery of the water pump **7** and the achievement of a condition of complete filling of the brewing chamber **3**;
   - Dwell time (time interval t₂ = t₃ in Figure 2): controlling the water pump **7** so as to keep it inoperative for a certain dwell time interval, so that the water flow rate supplied by it is zero and, therefore, no pressurised hot water is supplied to the brewing chamber **3**;
   - Brewing phase (time interval t₃ ÷ t₅ in Figure 2): closed-loop controlling the water pump **7**, conveniently by means of PID (proportional-integral-derivative) control techniques, based on the water flow rate Q measured by the water flow meter **5** so as to reach and maintain a target brewing flow rate Q₄ that allows an optimal compaction of the brewing substance in the brewing chamber **3** to be obtained.

In this way, during the brewing phase, the water pump **7** is differentially operated between a first and a second brewing sub-phase, in which:
▪ in the first brewing sub-phase (time interval t₃ ÷ t₄ in Figure 2) the water pump **7** is controlled in such a way as to gradually, i.e. not abruptly and relatively slowly, vary the water flow rate Q supplied to the brewing chamber **3** from an initial brewing water flow rate Q₃ to the target brewing water flow rate Q₄; and
▪ in the second brewing sub-phase (time interval t₄ ÷ t₅ in Figure 2) the water pump **7** is controlled in such a way as to maintain the water flow rate supplied to the brewing chamber **3** at the target brewing water flow rate Q₄ reached at the end of the first brewing sub-phase.

In the example shown in Figure 2, during the first brewing sub-phase (time interval t₃ ÷ t₄ in Figure 2) the water pump **7** is controlled in such a way as to gradually, conveniently but not necessarily linearly, reduce the water flow rate supplied to the brewing chamber **3** from the initial brewing water flow rate Q₃. which is conveniently, but not necessarily, greater than the initial pre-brewing water flow rate Q₁, for example 4-8 ml/s, to the target brewing water flow rate Q₄, which is conveniently, but not necessarily, between the initial and final pre-brewing water flow rates Q₁ and Q₂, for example 1-5 ml/s.

According to a further aspect of the invention, the electronic control unit **17** is further configured to control the water pump **7** during the first brewing sub-phase (time interval t₃ ÷ t₄ in Figure 2) in such a way as to limit the rate or speed or gradient of variation of the water flow rate Q supplied to the brewing chamber **3**, so that the target brewing water flow rate Q₄ is reached approximately around halfway through or from this point on in the brewing phase, so as not to excessively reduce the contribution of the first brewing sub-phase.

From an implementation point of view, the limitation of the gradient of variation of the water flow rate Q supplied to the brewing chamber **3** is obtained by limiting the correction gradient of the closed-loop control of the water pump **7**, i.e. by limiting the gradient of variation of the electric power absorbed by the water pump **7**.

The time durations t₀ ÷ t₂, t₂ ÷ t₃ and t₃ ÷ t₅ of the pre-brewing phase, dwell time and brewing phase, the pre-brewing electrical power P₁, the initial and target brewing water flow rates Q₃ and Q₄ and the gradient of variation of the electric power absorbed by the water pump **7** during the brewing phase are part of the functional data stored in the electronic control unit **17**.

The closed-loop control of the water flow rate described above causes the water pump **7** to operate differently between the first and second brewing sub-phases, in which:
- in the first brewing sub-phase (time interval t₃ ÷ t₄ in Figure 2) the water pump **7** is operated at an electric power that varies with a limited rate of variation, in the example shown in Figure 2 it decreases linearly, from an initial brewing electrical power P₂, which in the example shown in Figure 2 is higher than the pre-brewing electrical power P₁, to a final brewing electrical power P₃, which in the example shown in Figure 2 is approximately equal to the pre-brewing electrical power P₁; and
- in the second brewing sub-phase (time interval t₄ ÷ t₅ in Figure 2) the water pump **7** is operated at an electrical power that depends on the level of compaction of the coffee powder cake in the brewing chamber **3** and the back-pressure it generates as a function of the target brewing water flow rate Q₄, and which in the example shown in Figure 2 is equal to the final brewing electrical power P₃ as the target brewing water flow rate Q₄ has been reached.

The electronic control unit **17** is further configured to stop operation of the water pump **7** during the pre-brewing phase upon reaching the final pre-brewing water flow rate Q₂ or during the pre-brewing and brewing phases when the respective time durations t₀ ÷ t₂ and t₃ ÷ t₅ reach stored limit durations, so as to ensure that the selected coffee beverage is dispensed within a predefined maximum dispensing interval.

The above-described control of the water pump **7** differentiated between the pre-brewing and brewing phases and within the brewing phase itself makes it possible to achieve numerous advantages.

In particular, the above-described control of the water pump **7** during the pre-brewing phase allows the brewing chamber to be constantly filled during the pre-brewing phase, which in turn allows:
- beverage dispensing to become more repeatable in terms of in-cup beverage amount (compensating for partially empty circuit conditions between different beverage dispensing),
- effects of an excessive pre-loading of the hydraulic circuit (possible overpressures, if for example the filling of the brewing chamber were estimated in a fixed but excessive way) or of a poor pre-loading (to wet the coffee tablet more uniformly and thus improve the extraction) to be avoided,

- the brewing phase to start from a non-zero pressure condition in the brewing chamber, reducing noise and vibrations of the water pump,
- the transient between the closed-open states of the back-pressure valve to be dampened, thus reducing any undesirable effects of the spring valves (resonance or chattering), and
- if the brewing assembly is of the type able to operate with capsules/pods, control of the filling of the brewing chamber to be improved, thus making precise piercing conditions for the capsules/pods to be identified and the dispensing behaviour of the capsules/pods to be stabilised.

The above-described control of the water pump during the brewing phase allows, instead, to:
- pressure profiling in the brewing chamber to be achieved,
- excessive packing of the coffee powder cake to be avoided and hence, mechanical measures to be omitted, such as shut-off valves to limit the pressure in the brewing chamber,
- transients to be more smoothly managed,
- differentiated water flow rate management to be provided between the first part of the brewing phase (need to pack the cake or start the dispensing faster) and the second half of the brewing phase (slower flow of the dispensed beverage, aesthetically more attractive or longer wetting time of the coffee powder tablet), and
- operation and coffee extraction to be automatically adapted regardless of the variability of the components and the ground coffee.

## Claims

1. Automatic beverage preparation machine (**1**) comprising:
- a brewing assembly (**2**) comprising a brewing chamber (**11**) to contain a dose of a powder product;
- a hydraulic circuit (**4**) to supply a brewing liquid to the brewing chamber (**2**) to prepare a beverage from the powder product in the brewing chamber (**2**) and comprising a pump (**7**) and a flow meter (**5**) to measure an amount of brewing liquid supplied to the brewing chamber (**3**); and
- an electronic control unit (**17**) configured to communicate with the flow meter (**5**) to receive an output thereof and with the pump (**7**) to control operation thereof;
the electronic control unit (**17**) is further configured to control the pump (**7**) to carry out a beverage preparation cycle comprising a pre-brewing phase during which the brewing liquid is supplied to the brewing chamber (**3**) to pre-brew the powder product contained therein, followed by a dwell time during which no brewing liquid is supplied to the brewing chamber (**3**), and a subsequent brewing phase during which the brewing liquid is supplied to the brewing chamber (**3**) to brew the powder product contained therein and at the end of which the prepared beverage is delivered;
the electronic control unit (**17**) is further configured to:
- store functional data required to control operation of the pump (**7**) during a beverage preparation cycle;
- control the pump (**7**) based on the stored functional data during one or both of the pre-brewing and brewing phases by implementing one or both of the following controls:
▪ pre-brewing phase: open-loop controlling the pump (**7**) to cause it to operate at a stored partialised pre-brewing electrical power (P₁), so as to result in a time development of the flow rate (Q) of the brewing liquid supplied to the brewing chamber (**3**) being initially substantially constant at an initial pre-brewing flow rate (Q₁) during filling of the brewing chamber (**3**) and subsequently decreasing from the initial pre-brewing water flow rate (Q₁) to a final pre-brewing flow rate (Q₂) to cause the brewing chamber (**3**) to become completely filled (**3**);
- brewing phase: closed-loop controlling the pump (**7**) based on the flow rate (Q) of the brewing liquid measured by the flow meter (**5**) so as to cause a stored target brewing flow rate (Q₄) to be reached and then maintained from an initial brewing flow rate (Q₃).

2. The automatic beverage preparation machine (**1**) of claim **1**, wherein the electronic control unit (**17**) is further configured to control the pump (**7**) during the brewing phase so as to limit a gradient of variation of the flow rate (Q) of the brewing liquid supplied to the brewing chamber (**3**).

3. The automatic beverage preparation machine (**1**) of claim **2**, wherein the electronic control unit (**17**) is further configured to limit the gradient of variation of the flow rate (Q) of the brewing liquid supplied to the brewing chamber (**3**) by limiting a gradient of variation of an electrical power at which the pump (**7**) is cause to be operated during the brewing phase.

4. The automatic beverage preparation machine (**1**) of any one of the preceding claims, wherein the initial brewing flow rate (Q₃) is higher than the initial pre-brewing flow rate (Q₁).

5. The automatic beverage preparation machine (**1**) of any one of the preceding claims, wherein the target brewing flow rate (Q₄) is lower than the initial pre-brewing flow rate (Q₁).

6. The automatic beverage preparation machine (**1**) of any one of the preceding claims, wherein the electronic control unit (**17**) is further configured to stop operation of the pump **(7)** during the pre-brewing phase when the final pre-brewing flow rate (Q₂) is reached.

7. The automatic beverage preparation machine (**1**) of any one of the preceding claims, wherein the electronic control unit (**17**) is further configured to stop operation of the pump **(7)** during the pre-brewing and brewing phases when respective time durations reach stored time limit durations.

8. The automatic beverage preparation machine (**1**) of any one of the preceding claims, wherein the pump (**7**) is a vibration pump.

9. Control software loadable into, and executable by, the electronic control unit (**17**) of the automatic beverage preparation machine (**1**) of any one of the preceding claims and designed to cause, when executed, the electronic control unit (**17**) to become configured as claimed in any one of the preceding claims.
